# EUROPÄISCHE PATENTSCHRIFT

(11) **EP 3 237 795 B1**
(45) Veröffentlichungstag und Bekanntmachung des Hinweises auf die Patenterteilung: **09.03.2022**
(21) Anmeldenummer: 15840989.6
(22) Anmeldetag: 18.12.2015
(51) Int. Cl.: G03H 1/22, F21S 43/20, G02B 5/32, G03H 1/02, G03H 1/28, G03H 1/30

(54) **BELEUCHTUNGSVORRICHTUNG FÜR FAHRZEUGE**
LIGHTING DEVICE FOR VEHICLES
DISPOSITIF D'ÉCLAIRAGE POUR VÉHICULES

(30) Priorität: 22.12.2014 DE 102014119326
(43) Veröffentlichungstag der Anmeldung: 01.11.2017
(73) Patentinhaber: HELLA GmbH & Co. KGaA, 59552 Lippstadt (DE); Covestro Deutschland AG, 51373 Leverkusen (DE)
(72) Erfinder: MÜGGE, Martin, 59590 Geseke (DE); HOHMANN, Carsten, 59581 Warstein (DE); HAGEN, Rainer, 51377 Leverkusen (DE); WALZE, Günther, 51377 Leverkusen (DE); FÄCKE, Thomas, 51375 Leverkusen (DE)
(74) Vertreter: Ostermann, Thomas
(86) Internationale Anmeldenummer: PCT/DE2015/100541
(87) Internationale Veröffentlichungsnummer: WO 2016/101948

(56) Entgegenhaltungen:
- EP-A2- 0 879 990
- DE-A1- 4 421 306
- DE-A1-102012 107 770
- DE-A1-102013 108 333
- DE-C2- 4 421 306
- JP-A- H1 083 707
- JP-A- H1 120 567
- JP-A- H06 302 203
- JP-A- H10 223 006
- JP-A- 2016 012 430
- JP-B2- 3 068 448
- US-A- 5 495 227
- US-A- 5 571 277
- US-A- 5 816 681
- US-A- 5 963 345
- US-A1- 2010 302 794
- US-A1- 2012 212 933

## Beschreibung

Die Erfindung betrifft eine Beleuchtungsvorrichtung für Fahrzeuge nach dem Oberbegriff des Patentanspruchs 1.

Aus der DE 10 2013 100 561 A1 ist eine Beleuchtungsvorrichtung für Fahrzeuge bekannt, die eine Lichtquelle sowie einen stabförmigen Lichtleiter als Optikeinheit aufweist. Der stabförmige Lichtleiter verfügt über eine linienförmige Lichtauskoppelfläche, so dass eine vorgegebene Lichtfunktion erzeugt werden kann. Um ein hochwertiges Erscheinungsbild und eine markentypische Verwirklichung einer Lichtfunktion, beispielsweise einer Schlusslichtfunktion, zu erreichen, ist eine homogene Ausleuchtung der Lichtauskoppelfläche des Lichtleiters erforderlich. Der optische Aufwand hierfür ist relativ groß, da optische Mittel, wie Lichtleiter, Lichtscheiben und insbesondere eine große Anzahl von LED-Lichtquellen auf einander abgestimmt sein müssen, um die gewünschte homogene Ausleuchtung zu erzielen. Insbesondere ist es nach der bekannten Beleuchtungsvorrichtung nicht möglich, eine leuchtende Fläche in einer ein Leuchtengehäuse abdeckenden Lichtscheibe zu erzeugen.

Aus der JPH 10223006 A ist eine Beleuchtungsvorrichtung für Fahrzeuge bekannt, die eine Lichtquelle einerseits und eine Optikeinheit andererseits zur Erzeugung einer Lichtverteilung aufweist. Die Optikeinheit umfasst einen Reflektor, eine Lichtscheibe, eine Linse sowie ein Hologrammelement, so dass die Lichtfunktion zum einen durch ein direkt von der Lichtquelle in Richtung des Hologrammelementes abgesandtes Lichtbündel und zum anderen durch ein an dem Reflektor reflektiertes Lichtbündel erzeugt wird. Das Hologrammelement ist auf einer transparenten Platte angebracht. Nachteilig an der bekannten Beleuchtungsvorrichtung ist die hohe Komplexität der Optikeinheit, die von der großen Zahl verschiedener optischer Elemente herrührt. So wird die vorgegebene Lichtfunktion im Wesentlichen durch die optischen Mittel Reflektor und Linse bereitgestellt, wobei dem Hologrammelement lediglich eine Hilfsfunktion zukommt.

Aus der EP 0 879 990 A2 ist eine Beleuchtungsvorrichtung mit einer Mehrzahl von Lichtquellen und einer Mehrzahl von Hologrammelementen bekannt, wobei den Hologrammelementen stets zusätzliche Linsenelemente zugeordnet sind. Ein von der Beleuchtungsvorrichtung erzeugtes Ausleuchtmuster wird somit nicht ausschließlich durch die Hologrammelemente bewirkt, sondern stets in Kombination der Hologrammelemente mit den Linsenelementen.

Aus der JPH09185907 A ist eine Beleuchtungsvorrichtung bekannt, bei der unterschiedliche Hologrammelemente vorgesehen sind, denen unterschiedliche Lichtquellen zugeordnet sind. Das eine Hologrammelement dient in Verbindung mit einer ersten Lichtquelle zur Erzeugung eines Schlusslichtes. Das andere Hologrammelement dient in Verbindung mit einer anderen Lichtquelle zur Erzeugung eines Bremslichtes.

Aus der DE 44 21 306 A1 ist eine Beleuchtungsvorrichtung für Fahrzeuge mit einer Lichtquelle und einer Optikeinheit zur Erzeugung einer vorgegebenen Lichtfunktion bekannt. Die Optikeinheit umfasst einen Reflektor sowie ein Hologrammelement, mittels dessen ein vorgegebenes Ausleuchtmuster erstellt werden kann. Das Hologrammelement ist einstückig mit einer die Beleuchtungsvorrichtung abschließenden Lichtscheibe verbunden.

Aufgabe der vorliegenden Erfindung ist es, eine Beleuchtungsvorrichtung für Fahrzeuge derart weiterzubilden, dass mit verringertem Aufwand, insbesondere mit einer verringerten Anzahl von Lichtquellen, eine homogen leuchtende Fläche zur Erzeugung einer Signalfunktion erzielt wird.

Zur Lösung dieser Aufgabe weist die Erfindung die Merkmale des Patentanspruchs 1 auf.

Nach der Erfindung bewirkt ein Hologrammelement die Bereitstellung eines homogen anmutenden Ausleuchtmusters auf einer Ausleuchtfläche einer Lichtscheibe. Das Hologrammelement weist eine solche Beugungsstruktur auf, dass das von der Lichtquelle abgegebene Lichtbündel entsprechend dem vorgegebenen Ausleuchtmuster auf die Ausleuchtfläche der Lichtscheibe umgelenkt wird. Vorteilhaft können hierdurch Lichtflächen, leuchtende Signaturen und Erscheinungsbilder erzeugt werden. Das Hologrammelement dient als Strahlformer zur definierten Ausleuchtung von einer vorgegebenen Ausleuchtfläche. Die das Ausleuchtmuster charakterisierenden Lichtverteilungsinformationen sind in dem Hologrammelement enthalten. Die Lichtverteilung auf die Lichtscheibe wird somit ausschließlich durch das Hologrammelement bewirkt. Die Beleuchtungsvorrichtung benötigt somit relativ wenig optische Mittel, so dass die Optikeinheit kompakt gehalten sein kann. Ferner kann die Anzahl der Lichtquellen reduziert werden.

Nach der Erfindung weist das Hologrammelement einen größeren Abstand zu der Lichtscheibe auf als zu der Lichtquelle. Vorteilhaft kann das unter einem begrenzten Öffnungswinkel abgestrahlte Hologrammlichtbündel eine relativ breite Ausleuchtfläche erzeugen.

Nach einer bevorzugten Ausführungsform der Erfindung ist die Ausleuchtfläche der Lichtscheibe als eine eine linienförmige Signaturfläche ausgebildet, die zumindest von einer Nichtsignaturfläche begrenzt ist, auf die das Hologrammlichtbündel nicht trifft. In Abhängigkeit von der Ausgestaltung des Hologrammelementes kann die Signaturfläche als eine einzige Fläche oder aus mehreren Teilflächen bestehen. Sie kann auch eine grafische Ausprägung aufweisen, beispielsweise in Form eines Logos, einer Grafik, eines wiederkehrenden Musters (Mehrzahl von Punkten, Mehrzahl von Linien, Mehrzahl von Vielecken etc.). In Abhängigkeit von den stilistischen Anforderungen der Signalfunktion kann hierdurch ein variables Erscheinungsbild sowie eine homogene Ausleuchtung geschaffen werden.

Nach einer Weiterbildung der Erfindung kann die Ausleuchtfläche der Lichtscheibe profiliert ausgebildet sein. Insbesondere wenn die Ausleuchtfläche als ein aus der Ebene der Lichtscheibe erhebender Ausleuchtstreifen ausgebildet ist, ergibt sich ein dreidimensionales Erscheinungsbild der Beleuchtungsvorrichtung. Die einen dreidimensionalen Eindruck bzw. einen Tiefeneindruck der Beleuchtungsvorrichtung fördernde Eigenschaft resultiert daraus, dass das Hologrammelement so kleine optische Strukturen aufweist, dass sie für das menschliche Auge unsichtbar sind. Das Hologrammelement kann somit innerhalb eines Leuchtengehäuses der Beleuchtungsvorrichtung positioniert sein, ohne das es den Tiefeneindruck desselben beeinträchtigt. Insbesondere, wenn die Nichtsignaturfläche frei von Streuoptikelementen ist, beispielsweise transparent, wird ein Leuchtengehäuse mit einer Tiefenwirkung bereitgestellt.

Nach der Erfindung ist die Ausleuchtfläche mit Streuoptikelementen versehen, die insbesondere durch Erodieren oder Ätzen oder durch Lasern oder durch Fräsen herstellbar sind. Die Ausleuchtfläche erzeugt somit eine Streuwirkung, so dass die Lichtstärkewerte für die gewünschte Signalfunktion, beispielsweise für das Schluss-, Brems-, Blink-, Nebelschluss- oder Rückfahrlicht bereitgestellt werden. Im Betriebszustand der Leuchte sieht der Betrachter lediglich die beleuchtete Ausleuchtfläche der Lichtscheibe.

Nach einer Weiterbildung der Erfindung können mehrere Ausleuchtflächen vorzugsweise nebeneinander angeordnet sein, denen jeweils ein einziges Hologrammelement sowie jeweils eine einzige Lichtquelle zugeordnet sind. Vorteilhaft kann hierdurch eine langgestreckte Signaturfläche erzeugt werden, die sich beispielsweise im dreidimensionalen Raum erstreckt.

Nach einer Weiterbildung der Erfindung kann mehreren, in einem Bogen verlaufenden Ausleuchtflächen lediglich ein einziges Hologrammelement zugeordnet sein, das alle für die Ausleuchtflächen erforderlichen Lichtinformationen enthält. Zur Erzeugung der erforderlichen Leuchtdichte sind dem einzigen Hologrammelement mehrere Lichtquellen zugeordnet.

Nach einer Weiterbildung der Erfindung ist der Ausleuchtfläche ein zweites Hologrammelement zugeordnet, das eine solche Beleuchtungsgeometrie und ein solche spektrale Akzeptanz aufweist, dass Licht, das am ersten Hologrammelement gebeugt wurde und das zweite Hologrammelement erreicht, ebenfalls von diesem gebeugt wird. Das zweite Hologrammelement weist eine solche Hologrammstruktur auf, dass das Licht entsprechend einem Lambertschen Strahler gestreut und als zusätzliches Hologrammlichtbündel weitergestrahlt wird. Durch die Lambertsche Strahlcharakteristik dieses zweiten Hologrammelements wird das an ihm gestreute Licht aus verschiedenen Betrachtungsrichtungen als gleich hell empfunden. Auf diese Weise kann auf die Integration von herkömmlichen Streuoptikelementen in der Ausleuchtfläche verzichtet werden.

Nach einer Weiterbildung der Erfindung ist das Hologrammelement als ein Volumenhologrammelement ausgebildet, mittels dessen das Lichtbündel in einem definierten Winkel und/oder Spektralbereich gebeugt wird.

Nach einer Weiterbildung der Erfindung ist das Hologrammelement als ein Oberflächenhologrammelement, vorzugsweise in Form einer Folie oder als ein Spritzgießteil (Zusatzlichtscheibe) ausgebildet, mittels dessen das Lichtbündel in einem definierten Winkel- und/oder Spektralbereich gebeugt wird.

Nach einer Weiterbildung der Erfindung ist das Hologrammelement als eine diffraktive Optik auf einer Folie, einer Glasscheibe oder auf einer Kunststoff-Zusatzlichtscheibe ausgeführt, mittels dessen das Lichtbündel in einem definierten Winkel- und/oder Spektralbereich gebeugt wird.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine perspektivische Darstellung einer Beleuchtungsvorrichtung mit einem Hologrammelement und einer in einer Lichtscheibe integrierten Ausleuchtfläche nach einer ersten Ausführungsform der Erfindung, von seitlich vorn aus gesehen,
- Figur 2: eine perspektivische Vorderansicht der Beleuchtungsvorrichtung nach einer zweiten Ausführungsform mit einer Mehrzahl Ausleuchtflächen von Hologrammelementen und jeweils zugeordneten Lichtquellen,
- Figur 3: eine Seitenansicht der Beleuchtungsvorrichtung gemäß Figur 2 und
- Figur 4: eine perspektivische Vorderansicht einer Beleuchtugnsvorrichtung nach einer dritten Ausführungsform mit einem einzigen H, dem mehrere Ausleuchtflächen zugeordnet sind.

Eine erfindungsgemäße Beleuchtungsvorrichtung kann im Heck- und Bugbereich von Fahrzeugen zur Erzeugung einer Lichtfunktion mit einer Lichtverteilung angeordnet sein.

Beispielsweise kann die Beleuchtungsvorrichtung als Signalleuchte im Heckbereich zur Erzeugung einer Schlusslicht-, Bremslicht-, Blinklicht-, Nebelschlusslicht- oder einer Rückfahrlichtfunktion ausgebildet sein.

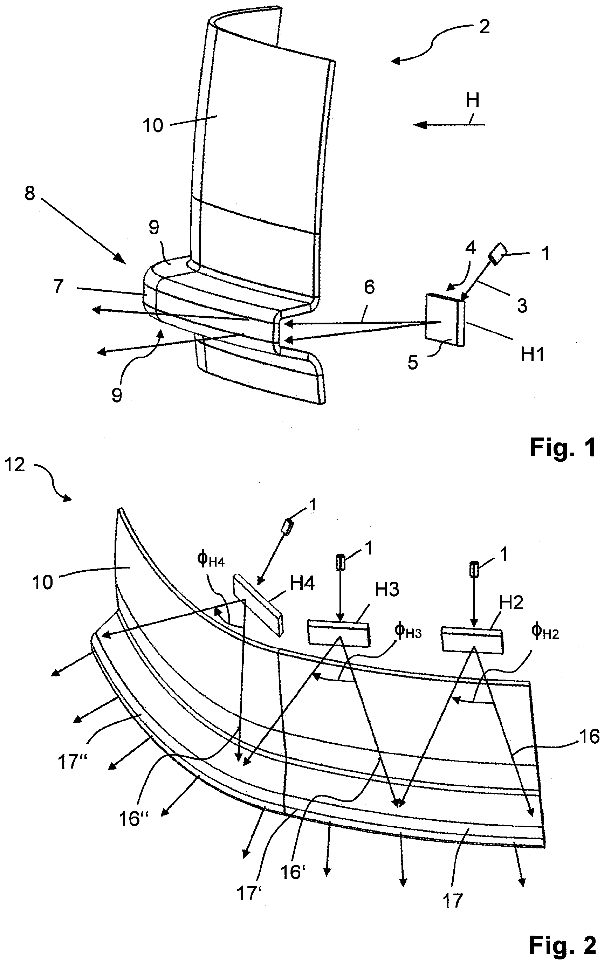

Nach einer ersten Ausführungsform der Beleuchtungsvorrichtung gemäß Figur 1 ist die Beleuchtungsvorrichtung durch eine Leuchteinheit gebildet, die eine Lichtquelle 1, ein Hologrammelement H1 und eine Lichtscheibe 2 aufweist.

Die Lichtquelle 1 kann als eine LED-Lichtquelle oder als eine Laserdiode ausgebildet sein. Die Lichtquelle 1 ist als eine halbleiterbasierte Lichtquelle ausgebildet, von der quasi punktförmig ein Lichtbündel 3 in Richtung einer hinteren Flachseite 4 des Hologrammelementes H1 abgestrahlt wird.

Das Hologrammelement H1 ist flächig und/oder plattenförmig ausgebildet, wobei eine Hologrammfolie bzw. Hologrammschicht auf eine transparente, hinreichend starre Trägerfläche aufgebracht ist. Die Trägerfläche kann eine Folie oder eine Platte sein. Die Hologrammfolie bzw. Hologrammschicht kann durch einen optisch transparenten Decklack und/oder einen optisch transparenten Kleber oder eine weitere Folie oder eine weitere Platte in das Hologrammelement H1 integriert werden. Das Hologrammelement H1 weist eine zu der hinteren Flachseite 4 parallel verlaufende vordere Flachseite 5 auf, von der aus ein Hologrammlichtbündel 6 in Richtung einer Ausleuchtfläche 7 der Lichtscheibe 2 abgestrahlt wird.

Das Hologrammelement H1 weist eine solche Beugungsstruktur bzw. Hologrammstruktur auf, dass das von der Lichtquelle 1 auftreffende Lichtbündel 3 entsprechend einem vorgegebenen Ausleuchtmuster verändert wird, so dass das Hologrammlichtbündel 6 die gesamte Ausleuchtfläche 7 erfasst und zur Erzeugung der vorgegebenen Lichtfunktion, beispielsweise des Schlusslichtes dient. Das Hologrammelement H1 weist kleinere optische Strukturen auf als ein refraktives Optikelement. Die optischen Strukturen des Hologrammelementes H1 sind - insbesondere für Richtungen, die nicht der Beugungsbedingung unterliegen - für einen Betrachter nicht erkennbar, so dass das Hologrammelement H1 nahezu unsichtbar für einen Betrachter ist. In dem Hologrammelement H1 sind Lichtverteilungsinformationen für die Ausleuchtfläche 7 der Lichtscheibe 2 bzw. des Ausleuchtmusters eingeschrieben. Die Ausleuchtfläche 7 dient als leuchtende Signaturfläche, von der aus das Licht 6 aufgrund der Strukturierung der Ausleuchtfläche diffus abgestrahlt wird. Die Lichtscheibe 2 ist in Hauptabstrahlrichtung H vor dem Hologrammelement H1 angeordnet.

Das Hologrammelement H1 ist vorzugsweise als ein holografisch-optisches Element (HOE) ausgebildet, das zur Klasse der diffraktiven optischen Elemente gehört. Diffraktiv optische Elemente zeichnen sich im Vergleich zu herkömmlichen refraktiven optischen Elementen durch deutlich kleinere optische Strukturen aus, die das Licht in einem begrenzten Spektral- und Winkelbereich beugen. Die diffraktiv optischen Elemente können als Gitter-, Linsen-, Spiegel, Strahlteiler, Farbfilter, Streuer oder als eine Kombination hieraus ausgeführt sein.

Vorzugsweise ist das Hologrammelement H1 als ein Volumenhologrammelement ausgebildet, das im Ausführungsbeispiel gemäß Figur 1 als Volumentransmissionshologrammelement vorliegt. Das Volumenhologrammelement ist als eine Emulsion oder als ein holografischer Film ausgebildet. Vorzugsweise ist das Hologrammelement H1 als ein Photopolymer in Form einer Folie ausgebildet. Das Volumenhologrammelement ist als ein relativ dickes Hologramm ausgebildet, da seine Gitterkonstante g immer kleiner ist als eine Dicke d des Folienmaterials. Das Produkt, das sich aus der Dicke d des Hologrammelementes H1 und der verwendeten Wellenlänge A ergibt, ist wesentlich größer als das Quadrat der Gitterkonstante g, siehe λ x d >> g².

Da die Gitterkonstante g relativ klein ist, höchstens im Bereich der Wellenlängen λ des Lichtes liegt, ist die Gitterstruktur für das menschliche Auge nahezu unsichtbar.

Wenn das Hologrammelement H1 als eine Folie ausgebildet ist, kann diese beispielsweise durch Tiefziehen vorgeformt sein. Die Folie wird dann in ein Spritzgusswerkzeug eingelegt und dann durch ein transparentes Material überspritzt, so dass das Hologrammelement H1 als eine starre transparente Platte vorliegt, die sich in einer Ebene erstreckt.

Alternativ kann die Hologrammelementfolie auch nachträglich auf die transparente Trägerscheibe aufgeklebt oder aufgeschweißt werden, beispielsweise durch Ultraschallschweißen.

An dem Hologrammelement H1 wird das Lichtbündel 3 unter einem definierten, begrenzten Winkel- und Spektralbereich gebeugt und als Hologrammlichtbündel 6 in Richtung der Ausleuchtfläche 7 abgestrahlt.

Die Ausleuchtfläche 7 ist Bestandteil der Lichtscheibe 2. Sie ist einstückig mit der Lichtscheibe 2 verbunden. Im vorliegenden Ausführungsbeispiel ist die Ausleuchtfläche 7 als ein Ausleuchtprofil 8 ausgebildet, das sich in horizontaler Richtung entlang eines Bogens erstreckt. Das Ausleuchtprofil 8 ist erhaben zu den restlichen Teilen der Lichtscheibe 2 angeordnet. Das Ausleuchtprofil 8 erstreckt sich streifenförmig. Das Ausleuchtprofil 8 weist gegenüberliegende nach vorne abragende Flanken 9 auf, deren vorderer Rand die Ausleuchtfläche 7 begrenzen.

Nach der vorliegenden Ausführungsform ist ausschließlich die Ausleuchtfläche 7, die eine Signaturfläche bildet, mit Streuoptikelementen versehen, die durch Erodieren oder durch Ätzen oder durch Lasern oder durch Fräsen hergestellt sind, so dass das auf sie treffende Hologrammlichtbündel 6 weiter gestreut wird zur Erzeugung der vorgegebenen Lichtverteilung. Die angrenzenden Teile, wie die Flanke 9 des Ausleuchtprofils 8 sowie die relativ großvolumige Basisfläche 10 der Lichtscheibe 2, die sich im Wesentlichen in einer vertikalen Ebene erstreckt, sind nicht mit den Streuoptikelementen versehen, sondern glasklar oder eingefärbt ausgebildet.

Die Flanke 9 sowie die Basisfläche 10 bilden eine Nichtsignaturfläche der Beleuchtungsvorrichtung, auf die nicht das Hologrammlichtbündel 6 auftrifft. Dadurch, dass die Flanke 9 und die Basisfläche 10 optikfrei bzw. strukturfrei ausgeführt sind, ist der innere Raum in einem nicht dargestellten Gehäuse angeordnete Leuchteinheit einsehbar, was eine Tiefenwirkung der Leuchteinheit begünstigt.

Die Lichtscheibe 2 ist vorzugsweise als eine das Gehäuse der Leuchteinheit abdeckenden Abdeckscheibe ausgebildet.

Nach einer nicht dargestellten alternativen Ausführungsform der Erfindung kann in dem Leuchtengehäuse eine zusätzliche Leuchteinheit angeordnet sein, die aus einer weiteren Lichtquelle und einer weiteren Optikeinheit besteht. Diese weitere Leuchteinheit kann zur Erzeugung einer zusätzlichen Lichtfunktion dienen. Beispielsweise kann die Optikeinheit der zusätzlichen Leuchteinheit einen Lichtleiter und/oder einen Reflektor und/oder eine Linse aufweisen. Die weitere Lichtquelle kann beispielsweise als LED-Lichtquelle ausgebildet sein.

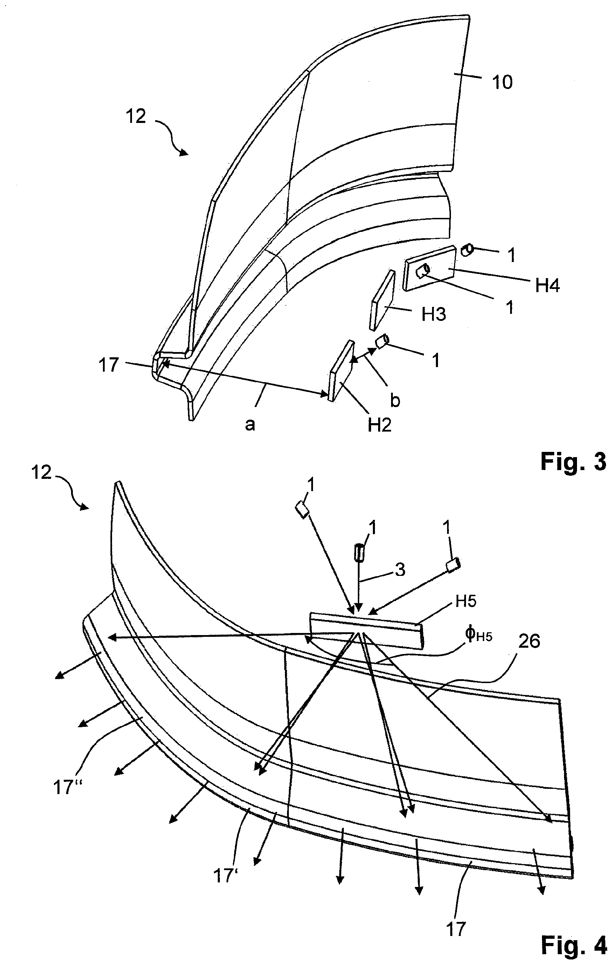

Nach einer zweiten Ausführungsform der Erfindung gemäß den Figuren 2 und 3 ist im Unterschied zu der ersten Ausführungsform der Erfindung eine Leuchteinheit vorgesehen, die eine Lichtscheibe 12 mit mehreren, vorzugsweise einstückig miteinander verbundenen Ausleuchtflächen 17, 17', 17" aufweist. Im dem vorliegenden Ausführungsbeispiel sind drei Ausleuchtflächen 17, 17', 17" vorgesehen, die sich aufeinanderfolgend in horizontaler Richtung entlang eines relativ langen Bogens der Lichtscheibe 12 erstrecken. Der Lichtscheibe 12 sind eine mit der Anzahl der Ausleuchtflächen 17, 17', 17" übereinstimmende Anzahl von Hologrammelementen H2, H3, H4 zugeordnet, die eine Optikeinheit zusammen mit der Lichtscheibe 12 der Leuchteinheit bilden. Den Hologrammelementen H2, H3, H4 sind jeweils eine Lichtquelle 1 zugeordnet.

Gleiche Bauteile bzw. Bauteilfunktionen der Ausführungsbeispiele sind mit den gleichen Bezugsziffern versehen.

Den Ausleuchtflächen 17, 17', 17" sind somit jeweils ein einziges Hologrammelement H2, H3, H4 zugeordnet, wobei die jeweils von den Hologrammelementen H2, H3, H4 abgestrahlten Hologrammlichtbündel 16, 16', 16" unter einem gleichen spitzen Öffnungswinkel Φ_{H2}, Φ_{H3} bzw. Φ_{H4} in Richtung der jeweiligen Ausleuchtflächen 17, 17', 17" abgestrahlt werden. Die Hologrammelemente H2, H3, H4 sind auf die jeweiligen Ausleuchtflächen 17, 17', 17" ausgerichtet. Die Ausleuchtflächen 17, 17', 17" grenzen aneinander.

Im vorliegenden Ausführungsbeispiel weisen die Ausleuchtflächen 17, 17', 17" die gleiche Länge in Horizontalrichtung auf. Weisen die Ausleuchtflächen 17, 17', 17" eine unterschiedliche Horizontalerstreckung auf, müssen die Öffnungswinkel der Hologrammelemente H2, H3, H4 nicht gleich sein, sie können in diesem Fall innerhalb eines definierten Öffnungswinkelbereiches, insbesondere eines spitzen Öffnungswinkelbereiches liegen.

Wie besonders gut aus Figur 3 ersichtlich ist, weisen die Hologrammelemente H2, H3, H4 einen Abstand a zu der Ausleuchtfläche 17, 17' bzw. 17" auf, der größer ist als ein Abstand b von den Hologrammelementen H2, H3, H4 zu den jeweiligen Lichtquellen 1. Je größer der Abstand a zwischen den jeweiligen Hologrammelementen H2, H3, H4 und den Ausleuchtflächen 17, 17', 17" ist, desto größer ist die zu beleuchtende Ausleuchtfläche 17, 17', 17". Die Lichtscheibe 12 nach der zweiten Ausführungsform unterscheidet sich von der Lichtscheibe 1 nach der ersten Ausführungsform im Wesentlichen dadurch, dass die Lichtscheibe 12 eine größere Horizontalerstreckung aufweist und damit ein größeres Leuchtengehäuse abdecken kann.

Nach einer weiteren Ausführungsform der Erfindung gemäß Figur 4 kann der Lichtscheibe 12 gemäß der zweiten Ausführungsform lediglich ein einziges Hologrammelement H5 zugeordnet sein. Dem Hologrammelement H5 sind drei Lichtquellen 1 zugeordnet, die den für die Lichtfunktion erforderlichen Lichtstrom bereitstellen. Das Hologrammelement H5 weist eine solche Hologrammstruktur auf, dass ein Hologrammlichtbündel 26 unter einem stumpfen Öffnungswinkel Φ_{H5} auf die mehreren Ausleuchtflächen 17, 17', 17" gerichtet ist bzw. abgestrahlt wird. Vorteilhaft kann hierdurch die Anzahl der Hologrammelemente reduziert werden.

Nach einer nicht dargestellten weiteren Ausführungsform der Erfindung kann zwischen der Lichtquelle 1 und dem Hologrammelement H1, H2, H3, H4, H5 ein Primäroptikelement vorgesehen sein, um beispielsweise ein relatives breites Lichtbündel 3 in Richtung des Hologrammelementes H1, H2, H3, H4, H5 zu fokussieren. Die Hologrammelemente H1, H2, H3, H4, H5 weisen die Umlenkinformationen für das Licht auf, damit ausschließlich die Ausleuchtfläche 7 bzw. 17, 17', 17" beleuchtet wird.

Nach der vorliegenden Ausführungsform der Erfindung ist die Ausleuchtfläche 7, 17, 17', 17" als eine linienförmige grafische Signaturfläche ausgebildet. Alternativ oder zusätzlich kann die grafische Signaturfläche auch durch andere grafische Muster, beispielsweise Punkte, Vielecke (Quadrate, Rechtecke, Sechsecke) ausgebildet sein. Ferner ist es möglich, mehrere Signaturflächen bzw. mehrteilige Signaturflächen auszubilden, wobei beispielsweise mehrteilige linienförmige Signaturflächen in einem Abstand übereinander angeordnet sein können.

In den vorgenannten Ausführungsbeispielen der Erfindung ist das Hologrammelement H1, H2, H3, H4, H5 als ein Oberflächenhologrammelement ausgebildet, bei dem die Hologrammstruktur in einer Hologrammfolie integriert ist, die an einer Oberfläche der transparenten und vorzugsweise starren Trägerfläche aufgebracht ist. Alternativ kann die Hologrammstruktur auch in einem Spritzgießteil (Zusatzlichtscheibe) integriert sein. Alternativ kann das Hologrammelement auch als eine diffraktive Optik in Form einer Folie oder in Form einer Glasscheibe oder in Form einer Kunststoff-Zusatzlichtscheibe ausgebildet sein, mittels dessen das Lichtbündel in einem definierten Winkel- und/oder Spektralbereich desselben gebeugt wird, so dass die vorgesehene Lichtfunktion erzeugt wird.

Es versteht sich, dass die schriebenen Ausführungsbeispiele nicht als abschließende Aufzählung zu verstehen sind, sondern vielmehr beispielhaften Charakter für die Schilderung der beanspruchten Erfindung haben.

## Patentansprüche

1. Beleuchtungsvorrichtung für Fahrzeuge, insbesondere eine Signalleuchte, mit einer Lichtquelle (1) zur Abstrahlung eines Lichtbündels (3) und mit einer der Lichtquelle (1) zugeordneten Optikeinheit zur Erzeugung einer vorgegebenen Lichtfunktion, wobei die Optikeinheit ein Hologrammelement (H1, H2, H3, H4, H5) und eine in Hauptabstrahlrichtung vor demselben angeordnete Lichtscheibe (2, 12) aufweist, dass das Hologrammelement (H1, H2, H3, H4, H5) eine solche Beugungsstruktur aufweist, dass das von der Lichtquelle (1) auf das Hologrammelement (H1, H2, H3, H4, H5) auftreffende Lichtbündel (3) entsprechend einem vorgegebenen Ausleuchtmuster verändert wird, **dadurch gekennzeichnet, dass** die Lichtscheibe (2, 12) mindestens eine Ausleuchtfläche (7; 17, 17', 17") aufweist, wobei die Ausleuchtfläche (7) mit Streuoptikelementen versehen ist, wobei der Ausleuchtfläche (7; 17, 17', 17") ein einziges Hologrammelement (H1, H2, H3, H4, H5) zugeordnet ist, so dass das von dem Hologrammelement (H1, H2, H3, H4, H5) abgestrahlte Hologrammlichtbündel (6) in Richtung der in einem Abstand (a) von dem mindestens einem Hologrammelement (H1, H2, H3, H4, H5) angeordneten Ausleuchtfläche (7; 17, 17', 17") abgestrahlt wird, wobei eine Lichtverteilung auf der Lichtscheibe (2, 12) ausschließlich durch das Hologrammelement (H1, H2, H3, H4, H5) bewirkt wird und wobei das Hologrammelement (H1, H2, H3, H4, H5) einen größeren Abstand (a) zu der Lichtscheibe (2, 12) aufweist als zu der Lichtquelle (1).

2. Beleuchtungsvorrichtung nach Anspruch 1, **dadurch gekennzeichnet, dass** die Ausleuchtfläche (7; 17, 17', 17") der Lichtscheibe (2, 12) als eine linienförmige Signaturfläche ausgebildet ist, an der sich randseitig eine Nichtsignaturfläche der Lichtscheibe (2, 12) anschließt, die nicht von dem Hologrammlichtbündel (6; 16, 16', 16") erfasst wird.

3. Beleuchtungsvorrichtung nach Anspruch 2, **dadurch**
**gekennzeichnet, dass** die linienförmige Signaturfläche der Lichtscheibe (2, 12) als eine grafische Signaturfläche mit einem grafischen Muster, insbesondere Linien, Punkten oder Vielecken, oder als eine mehrteilige Signaturfläche, insbesondere als eine mehrteilige linienförmige Signaturfläche, bei der mehrere linienförmige Signaturflächen in Abstand übereinander angeordnet sind, ausgebildet ist.

4. Beleuchtungsvorrichtung nach einem der Ansprüche 2 bis 3,
**dadurch gekennzeichnet, dass** die linienförmige Signaturfläche (7; 17, 17', 17") der Lichtscheibe (2, 12) in einem langgetreckten Ausleuchtprofil (8) integriert ist, das sich in Richtung der Signalfläche erstreckt.

5. Beleuchtungsvorrichtung nach einem der Ansprüche 2 bis 4,
**dadurch gekennzeichnet, dass** die Streuoptikelementen durch Erodieren oder durch Ätzen oder durch Lasern oder durch Fräsen herstellbar sind.

6. Beleuchtungsvorrichtung nach einem der Ansprüche 1 bis 5, **dadurch gekennzeichnet, dass** die Lichtscheibe (2, 12) als eine ein Leuchtengehäuse verschließende Abdeckscheibe ausgebildet ist, wobei in dem Leuchtengehäuse einer aus der Lichtquelle (1) und den Hologrammelementen (H1, H2, H3, H4, H5) gebildete Leuchteinheit angeordnet ist.

7. Beleuchtungsvorrichtung nach einem der Ansprüche 2 bis 6, **dadurch gekennzeichnet, dass** die Nichtsignaturfläche (10) und/oder die Flanke (9) des Ausleuchtprofils (8) frei von Streuoptikelementen ist.

8. Beleuchtungsvorrichtung nach einem der Ansprüche 2 bis 7,
**dadurch gekennzeichnet, dass** mehrere linienförmige Signaturflächen (17, 17', 17") nebeneinander vorgesehen sind, denen jeweils ein einziges Hologrammelement (H2, H3, H4) und eine einzige Lichtquelle (1) zugeordnet sind, wobei die jeweils von den Hologrammelementen (H2, H3, H4) abgestrahlten Hologrammlichtbündel (16, 16', 16") unter einem gleichen spitzen Öffnungswinkel (Φ_{H2}, Φ _{H3}, Φ_{H4}) oder in einem definierten Öffnungswinkelbereich abgestrahlt werden.

9. Beleuchtungsvorrichtung nach einem der Ansprüche 1 bis 8, **dadurch gekennzeichnet, dass** mehrere Ausleuchtflächen vorgesehen sind, denen ein einziges Hologrammelement (H5) und einer Anzahl von in unterschiedlichen Winkeln zu demselben angeordnete Lichtquellen (1) zugeordnet sind, wobei das Hologrammlichtbündel (26) unter einem stumpfen Öffnungswinkel (Φ_{H5}) in Richtung der linienförmigen Signaturfläche (17, 17', 17") abstrahlbar ist.

10. Beleuchtungsvorrichtung nach einem der Ansprüche 1 bis 9,
**dadurch gekennzeichnet, dass** das Hologrammelement (H1, H2, H3, H4, H5) als ein Volumenhologrammelement ausgebildet ist, mittels dessen das Lichtbündel (6, 16, 16', 16", 26) in einem definierten Winkel- und/oder Spektralbereich desselben gebeugt wird, so dass die vorgesehene Lichtfunktion erzeugbar ist.

11. Beleuchtungsvorrichtung nach einem der Ansprüche 1 bis 10,
**dadurch gekennzeichnet, dass** das Hologrammelement (H1, H2, H3, H4, H5) als ein Oberflächenhologrammelement oder als eine diffraktive Optik in Form einer Folie oder in Form einer Glasscheibe oder in Form einer Kunststoff-Zusatzlichtscheibe ausgebildet ist, mittels dessen das Lichtbündel (6, 16, 16', 16", 26) in einem definierten Winkel- und/oder Spektralbereich desselben gebeugt wird, so dass die vorgesehen Lichtfunktion erzeugbar ist.

12. Beleuchtungsvorrichtung nach einem der Anspruch 11,
**dadurch gekennzeichnet, dass** das Oberflächenhologrammelement eine die Hologrammstruktur aufweisende Hologrammfolie oder eine die Hologrammstruktur aufweisendes Spritzgießteil umfasst, mittels dessen das Lichtbündel (6, 16, 16', 16", 26) in einem definierten Winkel- und/oder Spektralbereich desselben gebeugt wird, so dass die vorgesehene Lichtfunktion erzeugbar ist.

13. Beleuchtungsvorrichtung nach einem der Ansprüche 1 bis 12
**dadurch gekennzeichnet, dass** in dem Leuchtengehäuse eine aus einer weiteren Lichtquelle und einem weiteren Optikelement bestehende Leuchteinheit zur Erzeugung einer weiteren Lichtfunktion angeordnet ist.

## Claims

1. A lighting device for vehicles, in particular a signal light, with a light source (1) for emitting a light beam (3) and an optical unit associated with the light source (1) for generating a predetermined light function, wherein the optical unit has a holographic element (H1, H2, H3, H4, H5) and a lens (2, 12) arranged in the main emission direction in front of the same, wherein the holographic element (H1, H2, H3, H4, H5) has such a diffraction structure that the light beam (3) from the light source (1) striking the holographic element (H1, H2, H3, H4, H5) is varied according to a predetermined illumination pattern, **characterised in that**
the lens (2, 12) has at least one illumination surface (7; 17, 17', 17"), wherein the illumination surface (7) is provided with scattering optical elements, wherein a single holographic element (H1, H2, H3, H4, H5) is associated with the illumination surface (7; 17, 17', 17") such that the holographic light beam (6) emitted by the holographic element (H1, H2, H3, H4, H5) is emitted in the direction of the illumination surface (7; 17, 17', 17") arranged at a distance (a) from the at least one holographic element (H1, H2, H3, H4, H5), wherein a distribution of light onto the lens (2, 12) is exclusively effected by the holographic element (H1, H2, H3, H4, H5) and wherein the holographic element (H1, H2, H3, H4, H5) is at a greater distance (a) from the lens (2, 12) than from the light source (1).

2. The lighting device according to Claim 1,
**characterised in that** the illumination surface (7; 17, 17', 17") of the lens (2, 12) is formed as a linear signature surface, to which a non-signature surface of the lens (2, 12) is connected at a border, which non-signature surface is not hit by the holographic light beam (6, 16, 16', 16").

3. The lighting device according to Claim 2,
**characterised in that** the linear signature surface of the lens (2, 12) is formed as a graphical signature surface having a graphical pattern, in particular lines, dots or polygons, or as a multi-part signature surface, in particular as a multi-part linear signature surface, in which multiple linear signature surfaces are arranged above one another at a distance.

4. The lighting device according to any one of Claims 2 to 3, **characterised in that** the linear signature surface (7; 17, 17', 17") of the lens (2, 12) is integrated in an elongated illumination profile (8) which extends in the direction of the signal surface.

5. The lighting device according to any one of Claims 2 to 4, **characterised in that** the scattering optical elements can be produced by electrical discharge machining or by etching or by lasering or by milling.

6. The lighting device according to any one of Claims 1 to 5, **characterised in that** the lens (2, 12) is formed as a cover disk covering a light housing, wherein a lighting unit formed from the light source (1) and the holographic elements (H1, H2, H3, H4, H5) is arranged in the light housing.

7. The lighting device according to any one of Claims 2 to 6, **characterised in that** the non-signature surface (10) and/or the edge (9) of the illumination profile (8) is/are free from scattering optical elements.

8. The lighting device according to any one of Claims 2 to 7, **characterised in that** multiple linear signature surfaces (17, 17', 17") are provided next to one another, with each of which a single holographic element (H2, H3, H4) and a single light source (1) are associated, wherein the holographic light beams (16, 16', 16") emitted in each case by the holographic elements (H2, H3, H4) are emitted at a similar acute aperture angle (Φ_{H2}, Φ_{H3}, Φ_{H4}) or within a defined aperture angle range.

9. The lighting device according to any one of Claims 1 to 8, **characterised in that** multiple illumination surfaces are provided, with which a single holographic element (H5) and a number of light sources (1) arranged at different angles to the same are associated, wherein the holographic light beam (26) can be emitted at an obtuse aperture angle (Φ_{H5}) in the direction of the linear signature surface (17, 17', 17").

10. The lighting device according to any one of Claims 1 to 9, **characterised in that** the holographic element (H1, H2, H3, H4, H5) is formed as a volume holographic element, by means of which the light beam (6, 16, 16', 16", 26) is diffracted within a defined angular and/or spectral range of the same such that the planned light function can be generated.

11. The lighting device according to any one of Claims 1 to 10, **characterised in that** the holographic element (H1, H2, H3, H4, H5) is formed as a surface holographic element or as a diffractive optical structure in the form of a film or in the form of a glass plate or in the form of a plastic additional lens, by means of which the light beam (6, 16, 16', 16", 26) is diffracted within a defined angular and/or spectral range of the same such that the planned light function can be generated.

12. The lighting device according to Claim 11,
**characterised in that** the surface holographic element comprises a holographic film having the holographic structure or an injection-moulded part having the holographic structure, by means of which the light beam (6, 16, 16', 16", 26) is diffracted within a defined angular and/or spectral range of the same such that the planned light function can be generated.

13. The lighting device according to any one of Claims 1 to 12, **characterised in that** a lighting unit consisting of a further light source and a further optical element is arranged in the light housing in order to generate a further light function.

## Revendications

1. Dispositif d'éclairage pour véhicules, en particulier un feu de signalisation, avec une source lumineuse (1) pour l'émission d'un faisceau lumineux (3) et avec une unité optique attribuée à la source lumineuse (1) pour la production d'une fonction d'éclairage prédéterminée, l'unité optique présentant un élément d'hologramme (H1, H2, H3, H4, H5) et une vitre de phare (2, 12) disposée devant celui-ci dans la direction d'émission principale, l'élément d'hologramme (H1, H2, H3, H4, H5) présentant une structure de diffraction telle que le faisceau lumineux (3) de la source lumineuse (1) frappant l'élément d'hologramme (H1, H2, H3, H4, H5) est modifié de façon correspondante à un schéma d'éclairage prédéterminé, **caractérisé en ce que** la vitre de phare (2, 12) présente au moins une surface d'éclairage (7 ; 17, 17', 17"), la surface d'éclairage (7) étant munie d'éléments d'optique de dispersion, un unique élément d'hologramme (H1, H2, H3, H4, H5) étant attribué à la surface d'éclairage (7 ; 17, 17', 17"), de telle sorte que le faisceau lumineux d'hologramme (6) émis par l'élément d'hologramme (H1, H2, H3, H4, H5) est émis dans la direction de la surface d'éclairage (7; 17, 17', 17") disposée à une distance (a) de l'au moins un élément d'hologramme (H1, H2, H3, H4, H5), une distribution lumineuse sur la vitre de phare (2, 12) étant effectuée uniquement par l'élément d'hologramme (H1, H2, H3, H4, H5) et l'élément d'hologramme (H1, H2, H3, H4, H5) présentant une distance (a) avec la vitre de phare (2, 12) supérieure à la distance avec la source lumineuse (1).

2. Dispositif d'éclairage selon la revendication 1,
**caractérisé en ce que** la surface d'éclairage (7 ; 17, 17', 17") de la vitre de phare (2, 12) est formée comme une surface de signature linéaire au bord de laquelle une surface de non-signature de la vitre de phare (2, 12) est reliée, laquelle n'est pas touchée par le faisceau lumineux d'hologramme (6 ; 16, 16', 16").

3. Dispositif d'éclairage selon la revendication 2,
**caractérisé en ce que** la surface de signature linéaire de la vitre de phare (2, 12) est formée comme une surface de signature graphique avec un motif graphique, en particulier des lignes, des points ou des polygones, ou comme une surface de signature à plusieurs parties, en particulier comme une surface de signature linéaire à plusieurs parties sur laquelle plusieurs surfaces de signature linéaires sont disposées à distance les unes au-dessus des autres.

4. Dispositif d'éclairage selon l'une des revendications 2 à 3,
**caractérisé en ce que** la surface de signature linéaire (7; 17, 17', 17") de la vitre de phare (2, 12) est intégrée dans un profil d'éclairage longitudinal (8), lequel s'étend dans la direction de la surface de signalisation.

5. Dispositif d'éclairage selon l'une des revendications 2 à 4,
**caractérisé en ce que** les éléments d'optique de dispersion peuvent être fabriqués par électro-érosion ou par gravure chimique ou par découpage au laser ou par fraisage.

6. Dispositif d'éclairage selon l'une des revendications 1 à 5,
**caractérisé en ce que** la vitre de phare (2, 12) est formée comme une vitre de protection fermant un boîtier de lampe, une unité de lampe formée à partir de la source lumineuse (1) et des éléments d'hologramme (H1, H2, H3, H4, H5) étant disposée dans le boîtier de lampe.

7. Dispositif d'éclairage selon l'une des revendications 2 à 6,
**caractérisé en ce que** la surface de non-signature (10) et/ou le flanc (9) du profil d'éclairage (8) sont dépourvus d'éléments d'optique de dispersion.

8. Dispositif d'éclairage selon l'une des revendications 2 à 7,
**caractérisé en ce que** plusieurs surfaces de signature linéaires (17, 17', 17") sont prévues les unes à côté des autres, auxquelles un unique élément d'hologramme (H2, H3, H4) et une unique source lumineuse (1) sont respectivement attribués, les faisceaux lumineux d'hologramme (16, 16', 16") émis par les éléments d'hologramme (H2, H3, H4) étant émis avec un même angle d'ouverture aigu (Φ_{H2}, Φ_{H3}, Φ_{H4}) ou dans une plage angulaire d'ouverture définie.

9. Dispositif d'éclairage selon l'une des revendications 1 à 8,
**caractérisé en ce que** plusieurs surfaces d'éclairage sont prévues, auxquelles un unique élément d'hologramme (H5) et un nombre de sources lumineuses (1) disposées à des angles différents par rapport à celui-ci sont attribués, le faisceau lumineux d'hologramme (26) pouvant être émis avec un angle d'ouverture obtus (Φ_{H5}) dans la direction de la surface de signature linéaire (17, 17', 17").

10. Dispositif d'éclairage selon l'une des revendications 1 à 9,
**caractérisé en ce que** l'élément d'hologramme (H1, H2, H3, H4, H5) est formé comme un élément d'hologramme en volume au moyen duquel le faisceau lumineux (6, 16, 16', 16", 26) est diffracté dans une plage angulaire et/ou spectrale définie de celui-ci, de telle sorte que la fonction d'éclairage prévue peut être produite.

11. Dispositif d'éclairage selon l'une des revendications 1 à 10,
**caractérisé en ce que** l'élément d'hologramme (H1, H2, H3, H4, H5) est formé comme un élément d'hologramme en surface ou comme une optique de diffraction sous la forme d'un film ou sous la forme d'une vitre en verre ou sous la forme d'une vitre de phare additionnelle en matière plastique, au moyen desquels le faisceau lumineux (6, 16, 16', 16", 26) est diffracté dans une plage angulaire et/ou spectrale définie de celui-ci, de telle sorte que la fonction d'éclairage prévue peut être produite.

12. Dispositif d'éclairage selon la revendication 11,
**caractérisé en ce que** l'élément d'hologramme de surface comprend un film d'hologramme présentant la structure d'hologramme ou une pièce moulée par injection présentant la structure d'hologramme, au moyen desquels le faisceau lumineux (6, 16, 16', 16", 26) est diffracté dans une plage angulaire et/ou spectrale définie de celui-ci, de telle sorte que la fonction d'éclairage prévue peut être produite.

13. Dispositif d'éclairage selon l'une des revendications 1 à 12, **caractérisé en ce qu'**une unité d'éclairage se composant d'une source lumineuse supplémentaire et d'un élément optique supplémentaire est disposée dans le boîtier de lampe pour la production d'une fonction d'éclairage supplémentaire.
